(19) **Europäisches Patentamt**

**European Patent Office**

**Office européen des brevets**

(11) **EP 1 359 687 B1**

(12) **EUROPEAN PATENT SPECIFICATION**

(45) Date of publication and mention
of the grant of the patent:
**09.11.2005 Bulletin 2005/45**

(51) Int Cl.[7]: **H04B 10/18**, H04J 14/06,
H04B 3/32

(21) Application number: **02360177.6**

(22) Date of filing: **18.06.2002**

(54) **Compensation of disturbed polarized channels in an optical transmission system**

Kompensation von störbehaftete polarisierte Kanäle in einem optischen Übertragungssystem

Compensation de canaux polarisés brouilles dans un système de transmission optique

(84) Designated Contracting States:
**AT BE CH CY DE DK ES FI FR GB GR IE IT LI LU
MC NL PT SE TR**

(30) Priority: **02.05.2002 EP 02360142**

(43) Date of publication of application:
**05.11.2003 Bulletin 2003/45**

(73) Proprietor: **ALCATEL**
**75008 Paris (FR)**

(72) Inventor: **Franz, Bernd**
**74336 Brackenheim (DE)**

(74) Representative: **Rausch, Gabriele et al**
**Alcatel**
**Intellectual Property Department, Stuttgart**
**70430 Stuttgart (DE)**

(56) References cited:
**EP-A- 0 564 167**      **WO-A-01/19009**
**WO-A-01/84748**      **FR-A- 2 795 184**

• **DUVOISIN P F ET AL: "PERFORMANCE OF THE
ADAPTIVE BASEBAND DIAGONALIZER, A
CROSSTALK CANCELLER, IN
DUAL-POLARIZED 16-QAM SYSTEMS"
PROCEEDINGS OF THE SOUTHEAST
CONFERENCE. KNOXVILLE, TENNESSEE,
APRIL 11 - 13, 1988, PROCEEDINGS OF THE
SOUTHEAST CONFERENCE
(SOUTHEASTCON), NEW YORK, IEEE, US, 11
April 1988 (1988-04-11), pages 358-363,
XP000014643**

Note: Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid. (Art.
99(1) European Patent Convention).

## Description

## Field of the invention

The present invention relates to polarization multiplexing in optical transmission systems and in particular to a compensation of non linear distortions occurring in channels used for polarization multiplexed transmissions.

## Background of the invention

In order to increase the transmission capacity of optical transmission systems, it is known to use wavelength division multiplexing (WDM) transmissions. For WDM transmissions, different signals communicated via the same transmission line (e.g. optical fiber) are transmitted at different wavelengths wherein the number of different frequencies determines the number of different signals which can be transmitted over the same transmission line at the same time.

Dense wavelength division multiplexing (DWDM) representing an enhanced WDM increases the transmission capacity by combining multiple optical signals such that they can be amplified and transmitted as a group and provides a higher spectral efficiency.

A further enhancement of the transmission capacity in optical transmission systems can be obtained by polarization division multiplexing (PoIDM) wherein different signals transmitted via the same transmission line are separated from each other by means of different polarization modes. Usually, polarization division multiplexing is combined with (D)WDM, wherein at least two signals, which are polarized with respect to each other, are transmitted at the same frequency.

A problem in optical transmission systems, in particular for optical transmission lines, such as optical fibers, is the phenomena of polarization mode dispersion (PMD). Optical signals transmitted via an optical transmission line are subjected to polarization mode dispersion such that the polarization state of the signals is altered.

Especially in the case of (D)WDM systems utilizing polarization division multiplexing, non-linear signal distortions on optical transmission lines especially due to polarization mode dispersions (PMD) represent a problem. For polarization division multiplexing, the polarization states of different signals are employed to separate the same for transmission. At the receiving end of an optical transmission line, the different polarizations of the signals are used as a basis to distinguish different signals in order to obtain the respective original signals. Polarization mode dispersion along the optical transmission line disturbs the polarization based encoding of the signals. Therefore, at the end of the optical transmission line, a correct decoding of the different signals can be impaired or even impossible.

Further, polarization mode dispersion disturbing the polarization state of signals transmitted via the same optical transmission line can introduce non linear signal distortions such as cross-talk between channels. This can also result in signals at the end of a transmission line from which the original signals can not be obtained.

A major cause of polarization mode dispersion are asymmetries and non-linearities of optical fibers used in transmission lines. Fiber asymmetry may be inherent from the manufacturing process or it may occur during operation, e.g. form mechanical stress, temperature variations, vibrations etc.

To compensate such effects it is known to use devices mechanically acting on optical fibers to "counter-stresses" the fibers. A drawback of such mechanical devices is that they are more prone to failure over long durations. Because of combinations of these effects, and the random manner these effects can interact, resulting polarization mode dispersion will vary for different parts of an optical transmission line and different frequencies and will be difficult to predict. Thus, it would be necessary to adapt such mechanical devices to actual polarization mode dispersion in a flexible and fast manner which requires complex and expensive mechanical arrangements.

A further approach is to employ special optical fibers which are dispersion-optimized and particularly tolerant to fiber non-linearities. Nevertheless, such fibers can not avoid polarization mode dispersion related signal distortions at all.

Moreover, polarization mode dispersion is also a function of the length of an optical transmission line, i.e. the longer the optical transmission line the larger the extend of polarization mode dispersion. As a result, the transmission distance which can be actually achieved is reduced. To reduce transmission length related polarization mode dispersion problems it is known to simply shorten optical transmission lengths. This can be accomplished, for example, by receiver/transmitter units distributed along a transmission line which decode optical signals and transmit new corresponding optical signals. Such receiver/transmitter units are merely regenerating optical signals and, in general, do not provide further functions. Further, this approach is not suitable to avoid polarization mode dispersion and related effects, but will only result in a minimization thereof.

Further, special frequency allocation schemes and methods are used to reduce polarization mode dispersion and related effects.

In general, a problem associated with approaches for compensating polarization mode dispersion is that polarization mode dispersion is not completely or at least not sufficiently avoided. Thus, polarization mode dispersion and related effects will continue to occur. Especially in systems wherein polarization mode dispersion compensation will be performed at the receiving end of a transmission line, this will represent a severe problem. There, it might be possible to at least sufficiently compensate polarization mode dispersion distortions, but distortions along the transmission line affected by polarization mode dispersion, such as crosstalk, will still be present. As a result it is possible that received signals, even in case of a perfect polarization mode dispersion compensation, are distorted such that underlying original signals and its information, respectively, can not be obtained.

The international PCT patent application WO 01/84748 A1 discloses a receiver for optical polarization multiplex systems, wherein a received signal is polarization demultiplexed and is split into different branches. By minimizing correlation products between demultiplexed signals of different branches, it is ensured that the detected polarization components are free of crosstalk. Feedback control signals are generated to control the polarization demultiplexer.

European patent application EP 0564167 A2 discloses a receiver for optical polarization multiplex systems, wherein a received signal is polarization demultiplexed and is split into different branches. By appropriately weighting polarization components of the signals in the different branches, cross-channel interference due to polarization mode dispersion and/or non linear effects are reduced or suppressed.

**Object of the invention**

The object of the present invention is to overcome polarization mode dispersion related problems in polarization division multiplex optical signal transmissions. In greater detail, the object of the present invention is to provide for solutions which allow for an enhanced compensation of polarization mode dispersions effects which affect polarization division multiplexed signals by non linear distortions, e.g. cross-talk.

**Brief description of the invention**

To achieve the above object, the present invention provides a method for compensating signal distortions of signals polarized to each other in an optical wavelength division multiplex transmission system. On the basis of a first signal being obtained from a first polarized signal and a second signal being obtained from a second polarized signal, the first and second polarized signal being polarized with respect to each other, a first signal quality for the first signal is determined. Then, in dependence of the first signal quality, a first error signal is generated which is subtracted from the first signal to compensate signal distortions thereof.

For a compensation of signal distortions of the second signal, it is possible to determine a second signal quality for the second signal and use the second signal quality to generate a second error signal in response thereto. By subtracting the second error signal from the second signal a compensated second signal is provided.

In a preferred embodiment, the first error signal is generated from the second signal and/or the second error signal is generated from the first signal.

In general, but preferably in the latter embodiment, the method according to the invention comprises determining a first attenuation and/or a first delay in dependence of the first signal quality and applying the first attenuation and/or the first delay to the second signal to obtain the first error signal, and/or determining a second attenuation and/or a second delay in dependence of the second signal quality and applying the second attenuation and/or the second delay to the first signal to obtain the second error signal.

According to a preferred further embodiment, the first error signal is generated from at least one of the first polarized signal and the second polarized signal and/or the second error signal is generated from at least one of the first polarized signal and the second polarized signal.

Here, it is contemplate to determine a first attenuation in dependence of the first signal quality, to compare the first attenuation with a first cross-talk value representing cross-talk disturbing at least one of the first and second signals and to generate the first error signal from at least one of the first polarized signal and the second polarized signal, if the comparing indicates a predetermined relation of the first attenuation and the first cross-talk value.

In a comparable manner, it is possible to determine a second attenuation in dependence of the second signal quality, to compare the second attenuation with a second cross-talk value representing cross-talk disturbing at least one of the first and second signals and to generate the second error signal from at least one of the first polarized signal and the second polarized signal, if the comparing indicates a predetermined relation of the second attenuation and the second cross-talk value.

With respect to a signal quality assessment is possible to determine the first signal quality by assessing the signal quality of a signal being obtained by subtracting the first error signal from the first signal and/or to determine the second signal quality by assessing the signal quality of a signal being obtained by subtracting the second error signal from the second signal.

In order to obtain the first signal, it is contemplated to include polarization demultiplexing the first polarized signal or polarization demultiplexing and wavelength demultiplexing the first polarized signal.

In a similar way, the second signal can be obtained by polarization demultiplexing the second polarized signal or polarization demultiplexing and wavelength demultiplexing the second polarized signal.

Preferably, the polarization demultiplexing of the first polarized and/or the second polarized signal is respectively performed on the basis of measures indicating a polarization signal quality for the first signal and the second signal, respectively.

Further, the present invention provides an apparatus according to claim 9 for compensation of signal distortions of signals polarized to each other in an optical wavelength division multiplex transmission system. The apparatus according to the invention comprises a first unit for determination of a first signal quality for a first signal obtained from a first polarized signal, a first error signal generating unit for generation of a first error signal, and a first signal distortion compensation unit for subtraction of the first error signal from the first signal obtained from the second polarized signal, wherein the first and second polarized signal are polarized with respect to each other.

Preferably, the apparatus according to the invention comprises further a second unit for determination of a second signal quality for the second signal, a second error signal generating unit for generation of a second error signal, and a second signal distortion compensation unit for subtraction of the second error signal from the second signal.

For obtaining, which includes receiving, extracting, detecting of signals and the like, it is contemplated to employ a first unit for providing the first signal and a second unit for providing the second signal.

According to a preferred embodiment, the first error signal generating unit is adapted for a generation of the first error signal from the first signal, while, in addition or as an option, the second error signal generating unit is adapted for a generation of the second error signal from the first signal.

In general, but preferably for the latter mentioned embodiment, the first error signal generating unit is adapted of a determination a first attenuation and/or a first delay in dependence of the first signal quality and applying the first attenuation and/or the first delay to the first signal to obtain the first error signal, and/or the second error signal generating unit is adapted of a determination a second attenuation and/or a second delay in dependence of the second signal quality and applying the second attenuation and/or the second delay to the second signal to obtain the second error signal.

According to a preferred further embodiment, the first error signal generating unit is adapted of a determination of a first attenuation in dependence of the first signal quality, comparing the first attenuation with a first cross-talk value representing cross-talk disturbing at least one of first and second signals and generating the first error signal from at least one of the first polarized signal and the second polarized signal, if a predetermined relation of the first attenuation and the first cross-talk value is present.

In a comparable manner, it is possible that the second error signal generating unit is adapted of a determination of a second attenuation in dependence of the second signal quality, comparing the second attenuation with a second cross-talk value representing cross-talk disturbing at least one of first and second signals and generating the second error signal from at least one of the first polarized signal and the second polarized signal, if a predetermined relation of the second attenuation and the second cross-talk value is present.

Moreover, the first unit for determination of the first signal quality can be in communication with the first signal distortion compensation unit for a determination of the first signal quality for a signal from the first signal distortion compensation unit, and/or the second unit for determination of the second signal quality can be in communication with the second signal distortion compensation unit for a determination of the second signal quality for a signal from the second signal distortion compensation unit.

Additionally, units for polarization demultiplexing and/or wavelength demultiplexing of at least one of the first and second polarized signal can be included.

Here, it is preferred that a first polarization demultiplexing unit is in communication with the first unit for determination of the first signal quality for a polarization demultiplexing of the first polarized signal in dependence of the first signal quality.

**Brief description of the figures**

In the following description of preferred embodiments of the present invention it is referred to the accompanying figures wherein:

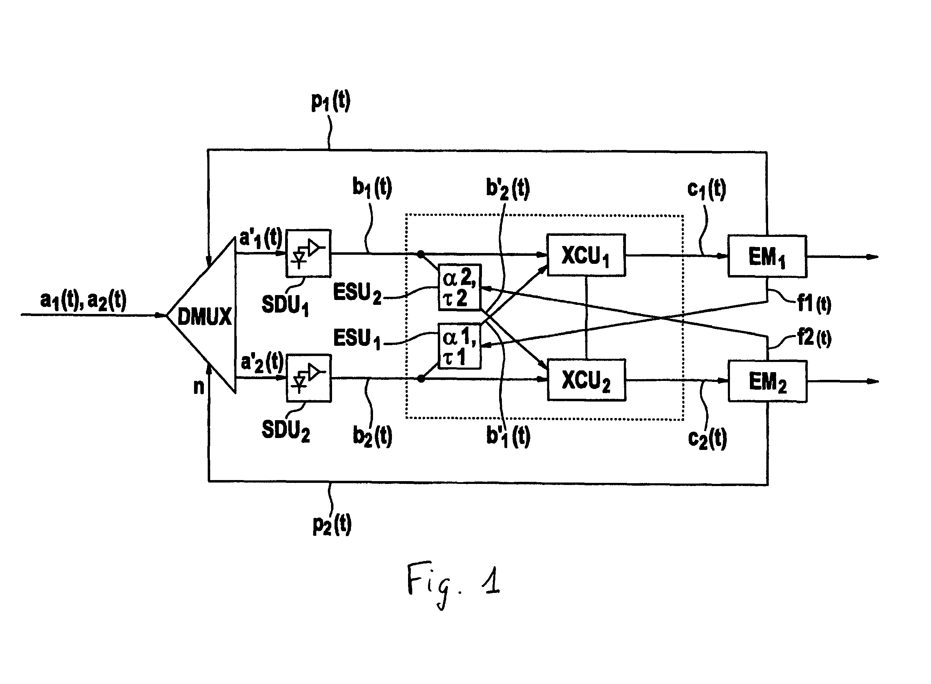

Fig. 1     schematically illustrates a receiver arrangement for compensating quasi- orthogonally polarized and disturbed signals according to the present invention, and

**Description of preferred embodiments**

In the following description, an (D)WDM transmission system is assumed wherein signals are transmitted via an optical transmission line by means of polarization division multiplexing. Signals are transmitted via different channels, wherein each channel is used to transmit at least two different signals which have different polarization states at the same wavelengths. Referring to fig. 1, the description is directed to a transmission of two signals at the same wavelength wherein the two signals are, preferably orthogonally (at the transmitter), polarized with respect to each other .

Fig. 1 schematically illustrates a receiving arrangement for receiving polarized signals of a common (D)WDM channel. For the above assumed transmission system, two signals $a_1(t)$ and $a_2(t)$ are received wherein these signals are polarized with respect to each other.

The signals $a_1(t)$ and $a_2(t)$ are received by a polarization demultiplexer DMUX and separated by demultiplexing using polarization filters. Further, the polarization demultiplexer DMUX receives feedback signals $p_1(t)$ and $p_2(t)$ used as control signals for the demultiplexing of the received signals $a_1(t)$ and $a_2(t)$.

The operation of the polarization demultiplexer DMUX is optimized in relation to the demultiplexing of the received signals $a_1(t)$ and $a_2(t)$ by means of the feedback signals $p_1(t)$ and $p_2(t)$. In particular, the feedback signals $p_1(t)$ and $p_2(t)$ are employed to control the polarization state of the polarization demultiplexer DMUX and, especially, its polarization filters.

For obtaining the feedback signals $p_1(t)$ and $p_2(t)$, eye monitors $EM_1$ and $EM_2$ or any other suitable quality measuring units which provide for an assessment a signal quality can be used.

The polarization demultiplexer DMUX generates two output signals $a'_1(t)$ and $a'_2(t)$ each thereof being supplied to signal detections units $SDU_1$ and $SDU_2$. The signal detections units $SDU_1$ and $SDU_2$ are used to convert the optical output signals $a'_1(t)$ and $a'_2(t)$ of the polarization demultiplexer DMUX into two corresponding electrical signals $b_1(t)$ and $b_2(t)$.

Non linear distortions along the optical transmission line and especially polarization mode dispersions and cross-talk effects disturb the polarization state of the signals $a_1(t)$ and $a_2(t)$. As a result, the signals $b_1(t)$ and $b_2(t)$ will also be subjected to non linear signal distortions.

Polarization mode dispersion (PMD) is treated by means of the closed control loops providing the feedback signals $p_1(t)$ and $p_2(t)$ associated to the demultiplexing processes of the received signals $a_1(t)$ and $a_2(t)$. The eye monitors $EM_1$ and $EM_2$ evaluate the quality of signals, which are derived on the basis of $a_1(t)$ and $a_2(t)$ and supplied to the eye monitors $EM_1$ and $EM_2$, with respect to its polarization states and supply the feedback signals $p_1(t)$ and $p_2(t)$ to the polarization demultiplexer DMUX for controlling the polarization demultiplexing of the signals $a_1(t)$ and $a_2(t)$.

Nevertheless, it is possible that the resulting signals $a'_1(t)$ and $a'_2(t)$ will still be distorted, in particular due to cross-talk effects.

As shown in fig. 1, cross-talk canceling units $XCU_1$ and $XCU_2$ ore employed to compensate for crosstalk effects. In general, the cross-talk canceling units $XCU_1$ and $XCU_2$ serve as units for applying error signals to the signals $b_1(t)$ and $b_2(t)$, respectively such that signal distortions are at least partially compensated.

The cross-talk canceling unit $XCU_1$ receives the signal $b_1(t)$ and an error signal $b'_1(t)$ from on error signal generating unit $ESU_1$. The error signal generating unit $ESU_1$ receives the signal $b_2(t)$ and modifies the signal $b_2(t)$ in dependence from at least one of parameters $\alpha 1$ and $\tau 1$ to obtain the error signal $b'_2(t)$. As output signal, the cross-talk canceling unit $XCU_1$ generates a signal $c_1(t)$ which represents, at least as an approximation, the original signal underlying the received signal $a_1(t)$. In greater detail, the signal $c_1(t)$ is corrected with respect to polarization mode dispersions and cross-talk effects.

The cross-talk canceling unit $XCU_2$ receives the signal $b_2(t)$ and an error signal $b'_2(t)$ from an error signal generating unit $ESU_2$. The error signal generating unit $ESU_2$ receives the signal $b_1(t)$ and modifies the signal $b_1(t)$ in dependence from at least one of parameters $\alpha 2$ and $\tau 2$ to obtain the error signal $b'_2(t)$. As output signal, the cross-talk canceling unit $XCU_2$ generates a signal $c_2(t)$ which represents, at least as an approximation, the original signal underlying the received signal $a_2(t)$. In greater detail, the signal $c_2(t)$ is corrected with respect to polarization mode dispersions and cross-talk effects.

The parameters $\alpha 1/\tau 1$ and $\alpha 2/\tau 2$ are provided by the eye monitors $EM_1$ and $EM_2$, respectively, by means of feedback signals f1 (t) and f2(t) respectively supplied to the error signal generating units $ESU_1$ and $ESU_2$. The parameters $\alpha 1$ and $\alpha 2$ indicate attenuations and the parameters $\tau 1$ and $\tau 2$ indicate delays to be applied to the signals $b_1(t)$ and $b_2(t)$.

For obtaining the parameters $\alpha 1$ and $\tau 1$, the eye monitor $EM_1$ is provided the signal $c_1(t)$ and evaluates the quality of the signal $c_1(t)$. In response to the detected signal quality for the signal $c_1(t)$, the eye monitor $EM_1$ controls the parameters $\alpha 1$ and $\tau 1$, in particular such that an optimal eye opening is achieved for the signal $c_1(t)$.

In a comparable manner, for obtaining the parameters $\alpha 2$ and $\tau 2$, the eye monitor $EM_2$ is provided the signal $c_2(t)$ and evaluates the quality of the signal $c_2(t)$. In response to the detected signal quality for the signal $c_2(t)$, the eye monitor $EM_2$ controls the parameters $\alpha 2$ and $\tau 2$, in particular such that an optimal eye opening is achieved for the signal $c_2(t)$.

The signals $c_1(t)$ and $c_2(t)$ generated by crosstalk canceling units $XCU_1$ and $XCU_2$ can be defined as:

$$c_1(t) = b_1(t) - b'_1(t) = b_1(t) - \alpha_1 {}^* b_2(t+\tau 1) \qquad (3)$$

and

$$c_2(t) = b_2(t) - b'_2(t) = b_2(t) - \alpha_2 {}^* b_1(t+\tau 2) . \qquad (4)$$

Here, the cross-talk canceling units $XCU_1$ and $XCU_2$ can be considered as subtracting units for the signals $b_1(t)$ and $b_2(t)$ and the error signals $b'_1(t)$ and $b'_2(t)$, respectively. Simulations performed for the above described receiving arrangement for optical transmissions employing WDM and PolDM have shown that cross-talk can be reduced by several decibel.

For transmission systems wherein the following assumptions are fulfilled, e.g. due to any other means or measures reducing non linear effects which distort orthogonally polarized signals, further embodiments described in the following can be employed to generate the signals $c_1(t)$ and $c_2(t)$ in order to obtain the signals underlying the received signals $a_1(t)$ and $a_2(t)$.

First, assuming no delay or time shift is to be applied to the signal $b_2(t)$ to obtain the error signal $b'_1(t)$ and further assuming the above nomed parameter a indicating cross-talk between the signals $a_1(t)$ and $a_2(t)$

corresponds with the parameter $\alpha_1$ representing the attenuation for the signal $b_2(t)$, the signal $c_1(t)$ can be defined as:

$$c_1(t) = b_1(t)- \alpha^*b_2(t) = (1-\alpha-\alpha^2)^*a_1(t)+\alpha^{2*}a_2(t)$$

$$= a_1(t)-((\alpha+\alpha^2)^*a_1(t)-\alpha^{2*}a_2(t)), \qquad (5)$$

wherein the signal component "$(\alpha+\alpha^2)^*a_1(t)-\alpha^{2*}a_2(t)$" can be considered as error signal for compensating signal distortions of the signal $a_1(t)$.

In a comparable manner, assuming no delay or time shift is to applied to the signal $b_1(t)$ to obtain the error signal $b'_2(t)$ and further assuming the above named parameter $\alpha$ indicating cross-talk between the signals $a_1(t)$ and $a_2(t)$ corresponds with the parameter $\alpha_2$ representing the attenuation for the signal $b_1(t)$, the signal $c_2(t)$ can be defined as:

$$c_2(t) = b_2(t)- \alpha^*b_1(t) = (1-\alpha-\alpha^2)^*a_2(t)+\alpha^{2*}a_1(t)$$

$$= a_2(t)-((\alpha+\alpha^2)^*a_2(t)-\alpha^{2*}a_1(t)), \qquad (6)$$

wherein the signal component "$(\alpha+\alpha^2)^*a_2(t)-\alpha^{2*}a_1(t)$" can be considered as error signal for compensating signal distortions of the signal $a_2(t)$.

Thus, the cross-talk canceling units $XCU_1$ and $XCU_2$ can be considered as subtracting units for the signals $b_1(t)$ and $b_2(t)$ and the respective error signals.

Second, assuming no delay or time shift is to be applied to the signal $b_2(t)$ to obtain the error signal $b'_1(t)$ and further assuming the parameter a, representing the attenuation for the signal $b_2(t)$ corresponds with $\alpha/(1-\alpha)$, a being the above named parameter indicating cross-talk between the signals $a_1(t)$ and $a_2(t)$, the signal $c_1(t)$ con be defined as:

$$c_1(t) = b_1(t)- \alpha/(1-\alpha)^*b_2(t) = (1-\alpha-\alpha^2/(1-\alpha))^*a_1(t)$$

$$= a_1(t)-(\alpha+\alpha^2/(1-\alpha))^*a_1(t), \qquad (7)$$

wherein the signal component "$(\alpha+\alpha^2/(1-\alpha))^*a_1(t)$" can be considered as error signal for compensating signal distortions of the signal $a_1(t)$.

In a comparable manner, assuming no delay or time shift is to be applied to the signal $b_1(t)$ to obtain the error signal $b'_2(t)$ and further assuming the parameter $\alpha_1$ representing the attenuation for the signal $b_1(t)$ corresponds with $\alpha/(1 - \alpha)$, $\alpha$ being the above named parameter indicating cross-talk between the signals $a_1(t)$ and $a_2(t)$, the signal $c_2(t)$ can be defined as:

$$c_2(t) = b_2(t)- \alpha/(1 -\alpha)^*b_1(t) = (1-\alpha-\alpha^2/(1-\alpha))^*a_2(t)$$

$$= a_2(t)-(\alpha+\alpha^2/(1-\alpha))^*a_2(t), \qquad (8)$$

wherein the signal component "$(\alpha+\alpha^2/(1-\alpha))^*a_2(t)$" can be considered as error signal for compensating signal distortions of the signal $a_2(t)$.

Again, the cross-talk canceling units $XCU_1$ and $XCU_2$ can be considered as subtracting units for the signals $b_1(t)$ and $b_2(t)$ and the respective error signals.

Starting from the above further embodiments, a further embodiment con be employed in case of a small value for $\alpha$ is existing or can be expected. Then, the following approximations for equations (5) and (7) and equations (6) and(8) can be used to obtain the signals $c_1(t)$ and $c_2(t)$:

$$c_1(t) = (1-\alpha)^*a_1(t) \qquad (10)$$

and

$$c_2(t) = (1-\alpha)^*a_2(t) , \qquad (11)$$

wherein the signal components "$\alpha^*a_1(t)$" and "$\alpha^*a_2(t)$" can be considered as error signal for compensating signal distortions of the signal $a_1(t)$ and $a_2(t)$, respectively. Thus, in this case, the cross-talk canceling units $XCU_1$ and $XCU_2$ can also be considered as subtracting units for the signals $b_1(t)$ and $b_2(t)$ and the respective error signals.

An additional improvement of the method can be obtained by shifting the optical phase between the two orthogonal polarized signals in such a way, that an optimal result (measured at the receiver) is obtained.

Before combining the two orthogonal polarized signals one signals is fed in an optical phase shifter. The phase shifter shifts the signal in relation of a feed back signal, which is extracted from the receiver side. On the receiver side, the two orthogonal signals are analyzed by eye monitors and the result of the analysis controls the phase shifters at the transmitter side.

**Claims**

1. A method for compensating signal distortions of signals polarized to each other in an optical wavelength division multiplex (WDM, DWDM) transmission system, comprising the steps of:

   • demultiplexing a received signal providing two signals (($b_1(t)$ $b_2(t)$)),
   • supplying each of said demultiplexed signals ($b_1(t)$, $b_2(t)$) to respective error signal generating units ($ESU_2$, $ESU_1$) for generating respective error signals ($b'_2(t)$, $b'_1(t)$)

- subtracting the signals ($(b_1(t)$ $b_2(t))$, from the error signals $b'_1(t)$ $b'_2(t))$ in the cross talk canceling units $XCU_1$ and $XCU_2$
- measuring the quality of the output signals (c1(t), c2(t)) in eye monitors (EM1, EM2)
- generating feed back signals ($p_1(t)$, $p_2(t)$, $f_1(t)$, $f_2(t)$ to control the polarization demultiplexer and the error signal generating units $ESU_1$ and $ESU_2$.

2. The method according claim 1, comprising the steps of:

- determining a first attenuation ($\alpha_1$) and/or $\alpha$ first delay ($\tau_1$) in dependence of the first signal quality ($f_1(t)$) and applying the first attenuation ($\alpha_1$) and/or the first delay ($\tau_1$) to the second signal ($b_2(t)$) to obtain the first error signal ($b'_1(t)$), and/or
- determining a second attenuation ($\alpha_2$) and/or a second delay ($\tau_2$) in dependence of the second signal quality ($f_2(t)$) and applying the second attenuation ($\alpha_2$) and/or the second delay ($\tau_2$) to the first signal ($b_1(t)$) to obtain the second error signal ($b'_2(t)$).

3. The method according to claim 1, comprising the steps of:

- determining a first attenuation ($\alpha_1$) in dependence of the first signal quality ($f_1(t)$), comparing the first attenuation ($\alpha_1$,) with a first cross-talk value ($\alpha$) representing cross-talk disturbing at least one of the first and second signals ($b_1(t)$, $6_2(t)$) and generating the first error signal ($b'_1(t)$) from at least one of the first polarized signal ($\alpha_1(t)$) and the second polarized signal ($\alpha_2(t)$), if the comparing indicates predetermined relation of the first affenuation ($\alpha_1$) and the first cross-talk value ($\alpha$), and/or
- determining a second attenuation ($\alpha_2$) in dependence of the second signal quality ($f_2(t)$), comparing the second attenuation ($\alpha_2$) with a second cross-talk value ($\alpha$) representing cross-talk disturbing at least one of the first and second signals ($b_1(t)$, $b_2(t)$) and generating the second error signal ($b'_2(t)$) from at least one of the first polarized signal ($a_1(t)$) and the second polarized signal ($a_2(t)$), if the comparing indicates a predetermined relation of the second attenuation ($\alpha_2$) and the second cross-talk value ($\alpha$).

4. The method according to claim 1, comprising the steps of:

- determining the first signal quality ($f_1(t)$) by determining a signal quality of a signal ($c_1(t)$) be-

ing obtained by subtracting the first error signal ($b'_1(t)$) from the first signal ($b_1(t)$), and/or
- determining the second signal quality ($f_2(t)$) by determining o signal quality of a signal ($c_2(t)$) being obtained by subtracting the second error signal ($b'_2(t)$) from the second signal ($b_2(t)$).

5. The method according to claim 1, comprising the steps of:

- polarization demultiplexing the first polarized signal ($a_1(t)$) or polarization demultiplexing and wavelength demultiplexing the first polarized signal ($a_1(t)$) to obtain the first signal ($b_1(t)$), and
- polarization demultiplexing the second polarized signal ($a_2(t)$) or polarization demultiplexing and wavelength demultiplexing the second polarized signal ($a_2(t)$) to obtain the second signal ($b_2(t)$).

6. The method according to claim 1, comprising the steps of:

- determining a first polarization signal quality ($p_1(t)$) for the first signal ($b_1(t)$) and polarization demultiplexing the first polarized signal ($a_1(t)$) in dependence of the first polarization signal quality ($p_1(t)$), and/or
- determining a second polarization signal quality ($p_2(t)$) for the second signal ($b_2(t)$) and polarization demultiplexing the second polarized signal ($a_2(t)$) in dependence of the second polarization signal quality ($p_2(t)$).

7. An apparatus for compensation of signal distortions of signals polarized to each other in an optical wavelength division multiplex transmission system, comprising:

- - a polarization demultiplexer for demultiplexing a received signal providing two signals ($(b_1(t)$ $b_2(t))$,
- error signal generating units $ESU_1$ and $ESU_2$ for generating error signals ($b'_1(t)$ $b'_2(t)$) from said demultiplexed signals ($b_2(t)$, $b_1(t)$), respectively
- cross talk canceling units $XCU_1$ and $XCU_2$ for subtracting the signals ($(b_1(t)$ $b_2(t))$, from the error signals $b'_1(t)$ $b'_2(t)$) and for providing output signals ($c_1(t)$, $c_2(t)$)
- eye monitors ($EM_1$, $EM_2$) for measuring the quality of said output signals ($c_1(t)$, $c_2(t)$)
- feed back loop to control the polarization demultiplexer and the error signal generating units $ESU_1$ and $ESU_2$ with feed back signals ($p_1(t)$, $p_2(t)$, $f_1(t)$, $f_1(t)$.

8. The apparatus according to claim 7, wherein:

- the first error signal generating unit (ESU$_1$) is adapted for determination of a first attenuation and/or a first delay in dependence of the first signal quality and for applying the first attenuation and/or the first delay to the first signal to obtain the first error signal, and/or
- the second error signal generating unit (ESU$_2$) is adapted for determination of a second attenuation and/or a second delay in dependence of the second signal quality and for applying the second attenuation and/or the second delay to the second signal to obtain the second error signal.

9. The apparatus according to claim 7, wherein:

- the first error signal generating unit (ESU$_1$) is adapted for determination of a first attenuation in dependence of the first signal quality, for comparing the first attenuation with a first cross-talk value representing cross-talk disturbing at least one of the first and second signals and for generating the first error signal from at least one of the first polarized signal and the second polarized signal, if a predetermined relation of the first attenuation and the first cross-talk value is present, and/or
- the second error signal generating unit (ESU$_2$) is adapted for determination of a second attenuation in dependence of the second signal quality, for comparing the second attenuation with a second cross-talk value representing cross-talk disturbing at least one the first and second signals and for generating the second error signal from at least one of the first polarized signal and the second polarized signal, if a predetermined relation of the second attenuation and the second cross-talk value is present.

10. The apparatus according to claim 10, wherein:

- the first unit (EM$_1$) for determination of the first signal quality is connected with the first signal distortion compensation unit (XCU$_1$) for a determination of the first signal quality for a signal from the first signal distortion compensation unit (XCU$_1$), and/or
- the second unit (EM$_2$) for determination of the second signal quality is connected with the second signal distortion compensation unit (XCU$_2$) for a determination of the second signal quality for a signal from the second signal distortion compensation unit (XCU$_2$).

**Patentansprüche**

1. Ein Verfahren zur Kompensation von Signalstörungen von zueinander polarisierten Signalen in einem optischen Übertragungssystem mit Wellenlängenmultiplex (WDM, DWDM), das folgende Schritte umfasst:

   • Demultiplexen eines empfangenen Signals, das zwei Signale liefert ($b_1(t)$, $b_2(t)$),
   • Liefern jedes der gedemultiplexten Signale ($b_1(t)$, $b_2(t)$) an entsprechende Fehlersignal-Erzeugungs-Einheiten (ESU$_2$, ESU$_1$) zur Erzeugung entsprechender Fehlersignale ($b'_2(t)$, $b'_1(t)$),
   • Subtraktion der Signale ($b_1(t)$, $b_2(t)$) von den Fehlersignalen $b'_1(t)$, $b'_2(t)$ in den Nebensprech-Beseitigungs-Einheiten XCU$_1$ und XCU$_2$
   • Messung der Qualität der Ausgangssignale ($c_1(t)$, $c_2(t)$) in Augen-Überwachern (EM1, EM2)
   • Erzeugung von Rückkopplungs-Signalen ($p_1(t)$, $p_2(t)$, $f_1(t)$, $f_2(t)$) zur Steuerung des Polarisations-Demultiplexers und der Fehlersignal-Erzeugungs-Einheiten ESU$_1$ und ESU$_2$.

2. Das Verfahren gemäß Anspruch 1, das folgende Schritte umfasst:

   - Bestimmung einer ersten Dämpfung ($\alpha_1$) und/ oder einer ersten Verzögerung ($\tau_1$) in Abhängigkeit von der ersten Signalqualität ($f_1(t)$) und Anwendung der ersten Dämpfung ($\alpha_1$) und/ oder der ersten Verzögerung ($\tau_1$) auf das zweite Signal ($b_2(t)$), um das erste Fehlersignal ($b'_1(t)$) zu erhalten, und/oder
   - Bestimmung einer zweiten Dämpfung ($\alpha_2$) und/ oder einer zweiten Verzögerung ($\tau_2$) in Abhängigkeit von der zweiten Signalqualität ($f_2(t)$) und Anwendung der zweiten Dämpfung ($\alpha_2$) und/ oder der zweiten Verzögerung ($\tau_2$) auf das erste Signal ($b_1(t)$), um das zweite Fehlersignal ($b'_2(t)$) zu erhalten.

3. Das Verfahren gemäß Anspruch 1, das folgende Schritte umfasst:

   - Bestimmung einer ersten Dämpfung ($\alpha_1$) in Abhängigkeit von der ersten Signalqualität ($f_1(t)$), Vergleich der ersten Dämpfung ($\alpha_1$) mit einem ersten Nebensprech-Wert ($\alpha$), der Nebensprechen repräsentiert, das mindestens eines der ersten und zweiten Signale ($b_1(t)$, $b_2(t)$) stört, und Erzeugung des ersten Fehlersignals ($b'_1(t)$) aus mindestens einem des ersten polarisierten Signals ($a_1(t)$) und des zweiten polarisierten Signals ($a_2(t)$), wenn der Vergleich eine vorher festgelegte Relation der ersten Dämp-

fung ($\alpha_1$) und des ersten Nebensprech-Wertes ($\alpha$) anzeigt, und/oder

- Bestimmung einer zweiten Dämpfung ($\alpha_2$) in Abhängigkeit von der zweiten Signalqualität ($f_2$(t)), Vergleich der zweiten Dämpfung ($\alpha_2$) mit einem zweiten Nebensprech-Wert ($\alpha$), der Nebensprechen repräsentiert, das mindestens eines der ersten und zweiten Signale ($b_1$(t), $b_2$(t)) stört, und Erzeugung des zweiten Fehlersignals ($b'_2$(t)) aus mindestens einem des ersten polarisierten Signals ($a_1$(t)) und des zweiten polarisierten Signals ($a_2$(t)), wenn der Vergleich eine vorher festgelegte Relation der zweiten Dämpfung ($\alpha_2$) und des zweiten Nebensprech-Wertes ($\alpha$) anzeigt.

4. Das Verfahren gemäß Anspruch 1, das folgende Schritte umfasst:

- Bestimmung der ersten Signalqualität ($f_1$(t)) durch Bestimmung einer Signalqualität eines Signals ($c_1$(t)), das man erhält, indem das erste Fehlersignal ($b'_1$(t)) vom ersten Signal ($b_1$(t)) subtrahiert wird, und/oder
- Bestimmung der zweiten Signalqualität ($f_2$(t)) durch Bestimmung einer Signalqualität eines Signals ($c_2$(t), das man erhält, indem das zweite Fehlersignal ($b'_2$(t)) vom zweiten Signal ($b_2$(t)) subtrahiert wird.

5. Das Verfahren gemäß Anspruch 1, das folgende Schritte umfasst:

- Polarisations-Demultiplex des ersten polarisierten Signals ($a_1$(t)) oder Polarisations-Demultiplex und Wellenlängen-Demultiplex des ersten polarisierten Signals ($a_1$(t)), um das erste Signal ($b_1$(t)) zu erhalten, und
- Polarisations-Demultiplex des zweiten polarisierten Signals ($a_2$(t)) oder Polarisations-Demultiplex und Wellenlängen-Demultiplex des zweiten polarisierten Signals ($a_2$(t)), um das zweite Signal ($b_2$(t)) zu erhalten.

6. Das Verfahren gemäß Anspruch 1, das folgende Schritte umfasst:

- Bestimmung einer ersten Polarisations-Signal-Qualität ($p_1$(t)) für das erste Signal ($b_1$(t)) und Polarisations-Demultiplex des ersten polarisierten Signals ($a_1$(t)) in Abhängigkeit von der ersten Polarisations-Signal-Qualität ($p_1$(t)), und/oder
- Bestimmung einer zweiten Polarisations-Signal-Qualität ($p_2$(t)) für das zweite Signal ($b_2$(t)) und Polarisations-Demultiplex des zweiten polarisierten Signals ($a_2$(t)) in Abhängigkeit von der zweiten Polarisations-Signal-Qualität ($p_2$

(t)).

7. Eine Vorrichtung zur Kompensation von Signalstörungen von zueinander polarisierten Signalen in einem optischen Übertragungssystem mit wellenlängenmultiplex, die folgendes umfasst:

- Einen Polarisations-Demultiplexer zum Demultiplexen eines empfangenen Signals, das zwei Signale bereitstellt ($b_1$(t), $b_2$(t)),
- Fehlersignal-Erzeugungs-Einheiten $ESU_1$ und $ESU_2$ zur Erzeugung von Fehlersignalen ($b'_1$(t), $b'_2$(t)) aus den gedemultiplexten Signalen ($b_2$(t), $b_1$(t))
- Nebensprech-Beseitigungs-Einheiten $XCU_1$ und $XCU_2$ zur Subtraktion der Signale ($b_1$(t), $b_2$(t)) von den Fehlersignalen $b'_1$(t), $b'_2$(t) und zur Bereitstellung der Ausgangssignale ($c_1$(t), $c_2$(t))
- Augen-Überwacher ($EM_1$, $EM_2$) zur Messung der Qualität der Ausgangssignale ($c_1$(t), $c_2$(t))
- Rückkopplungs-Schleife zur Steuerung des Polarisations-Demultiplexers und der Fehlersignal-Erzeugungs-Einheiten $ESU_1$ und $ESU_2$ mit den Rückkopplungs-Signalen ($p_1$(t), $p_2$(t), $f_1$(t), $f_2$(t)).

8. Die Vorrichtung gemäß Anspruch 7, worin:

- Die erste Fehlersignal-Erzeugungs-Einheit ($ESU_1$) so angepasst ist, dass sie eine erste Dämpfung und/oder eine erste Verzögerung in Abhängigkeit von der ersten Signalqualität bestimmt und die erste Dämpfung und/oder die erste Verzögerung auf das erste Signal anwendet, um das erste Fehlersignal zu erhalten, und/oder
- Die zweite Fehlersignal-Erzeugungs-Einheit ($ESU_2$) so angepasst ist, dass sie eine zweite Dämpfung und/oder eine zweite Verzögerung in Abhängigkeit von der zweiten Signalqualität bestimmt und die zweite Dämpfung und/oder die zweite Verzögerung auf das zweite Signal anwendet, um das zweite Fehlersignal zu erhalten.

9. Die Vorrichtung gemäß Anspruch 7, worin:

- Die erste Fehlersignal-Erzeugungs-Einheit ($ESU_1$) so angepasst ist, dass sie eine erste Dämpfung in Abhängigkeit von der ersten Signalqualität bestimmt, die erste Dämpfung mit einem ersten Nebensprech-Wert vergleicht, der Nebensprechen repräsentiert, das mindestens eines der ersten und zweiten Signale stört, und das erste Fehlersignal aus mindestens einem des ersten polarisierten Signals und des zweiten polarisierten Signals erzeugt, wenn eine vorher festgelegte Relation der ersten Dämpfung und des ersten Nebensprech-Wertes vorliegt, und/oder

- Die zweite Fehlersignal-Erzeugungs-Einheit (ESU$_2$) so angepasst ist, dass sie eine zweite Dämpfung in Abhängigkeit von der zweiten Signalqualität bestimmt, die zweite Dämpfung mit einem zweiten Nebensprech-Wert vergleicht, der Nebensprechen repräsentiert, das mindestens eines der ersten und zweiten Signale stört, und das zweite Fehlersignal aus mindestens einem des ersten polarisierten Signals und des zweiten polarisierten Signals erzeugt, wenn eine vorher festgelegte Relation der zweiten Dämpfung und des zweiten Nebensprech-Wertes vorliegt.

10. Die Vorrichtung gemäß Anspruch 10, worin:

- Die erste Einheit (EM$_1$) zur Bestimmung der ersten Signalqualität mit der ersten Signalstörungs-Kompensations-Einheit (XCU$_1$) verbunden ist, um die erste Signalqualität für ein Signal von der ersten Signalstörungs-Kompensations-Einheit (XCU$_1$) zu bestimmen, und/oder
- Die zweite Einheit (EM$_2$) zur Bestimmung der zweiten Signalqualität mit der zweiten Signalstörungs-Kompensations-Einheit (XCU$_2$) verbunden ist, um die zweite Signalqualität für ein Signal von der zweiten Signalstörungs-Kompensations-Einheit (XCU$_2$) zu bestimmen.

## Revendications

1. Procédé de compensation des distorsions de signal des signaux polarisés les uns par rapport aux autres dans un système de transmission par multiplexage par division par longueurs d'ondes (WDM, DWDM), comprenant les étapes :

- de démultiplexage d'un signal reçu pour fournir deux signaux (b$_1$(t), b$_2$(t)),
- de fourniture de chacun desdits signaux réalisés par démultiplexage (b$_1$(t) b$_2$(t)) aux unités de génération de signal d'erreur respectives (ESU$_1$, ESU$_2$) pour la génération de signaux d'erreur respectifs (b'$_1$(t), b'$_2$(t)),
- de soustraction des signaux (b$_1$(t), b$_2$(t)), des signaux d'erreur (b'$_1$(t) b'$_2$(t)) dans les unités de suppression de diaphonie XCU$_1$ et XCU$_2$,
- de mesure de la qualité des signaux en sortie (c$_1$(t), c$_2$(t)) dans les moniteurs oculaires (EM$_1$, EM$_2$)
- de génération de signaux de feedback (p$_1$(t), p$_2$(t), f$_1$(t), f$_2$(t)) pour contrôler le démultiplexeur de polarisation et les unités de génération de

signaux ESU$_1$ et ESU$_2$.

2. Procédé selon la revendication 1, comprenant les étapes :

- de détermination d'une première atténuation ($\alpha_1$) et/ou d'un premier délai ($\tau_1$) dépendant de la qualité du premier signal (f$_1$(t)) et d'application de la première atténuation ($\alpha_1$) et/ou du premier délai ($\tau_1$) au deuxième signal (b$_2$(t)) pour obtenir le premier signal d'erreur (b'$_1$(t)), et/ou
- de détermination d'une deuxième atténuation ($\alpha_2$) et/ou d'un premier délai ($\tau_2$) dépendant de la qualité du deuxième signal (f$_2$(t)) et d'application de la deuxième atténuation ($\alpha_2$) et/ou du deuxième délai ($\tau_2$) au premier signal (b$_1$(t)) pour obtenir le deuxième signal d'erreur (b'$_2$(t)).

3. Procédé selon la revendication 1, comprenant les étapes :

- de détermination d'une première atténuation ($\alpha_1$) dépendant de la qualité du premier signal (f$_1$(t)), de comparaison de la première atténuation ($\alpha_1$) avec une première valeur de diaphonie ($\alpha$) représentant la diaphonie qui perturbe au moins un des premiers et deuxièmes signaux (b$_1$(t), b$_2$(t)) et la génération du premier signal d'erreur (b'$_1$(t)) depuis au moins un des premiers signaux polarisés (a$_1$(t)) et un des deuxièmes signaux polarisés (a$_2$(t)), si la comparaison indique une relation prédéterminée entre la première atténuation ($\alpha_1$) et la première valeur de diaphonie ($\alpha$), et/ou
- de détermination d'une deuxième atténuation ($\alpha_2$) dépendant de la qualité du deuxième signal (f$_2$(t)), de comparaison de la deuxième atténuation ($\alpha_2$) avec une deuxième valeur de diaphonie ($\alpha$) représentant la diaphonie qui perturbe au moins un des premiers et deuxièmes signaux (b$_1$(t), b$_2$(t)) et la génération du deuxième signal d'erreur (b'$_2$(t)) depuis au moins un des premiers signaux polarisés (a$_1$(t)) et un des deuxièmes signaux polarisés (a$_2$(t)), si la comparaison indique une relation prédéterminée entre la deuxième atténuation ($\alpha_2$) et la deuxième valeur de diaphonie ($\alpha$).

4. Procédé selon la revendication 1, comprenant les étapes :

- de détermination de la qualité du premier signal (f$_1$(t)) en déterminant la qualité de signal d'un signal (c$_1$(t)) obtenu en soustrayant le premier signal d'erreur (b'$_1$(t)) du premier signal (b$_1$(t)), et/ou
- de détermination de la qualité du deuxième si-

gnal ($f_2(t)$) en déterminant la qualité de signal d'un signal ($c_2(t)$) obtenu en soustrayant le deuxième signal d'erreur ($b'_2(t)$) du deuxième signal ($b_2(t)$).

5. Procédé selon la revendication 1, comprenant les étapes :

   - de multiplexage par polarisation du premier signal polarisé ($a_1(t)$) ou de multiplexage par polarisation et multiplexage par longueurs d'ondes du premier signal polarisé ($a_1(t)$) afin d'obtenir le premier signal ($b_1(t)$), et
   - de multiplexage par polarisation du deuxième signal polarisé ($a_2(t)$) ou de multiplexage par polarisation et multiplexage par longueurs d'ondes du deuxième signal polarisé ($a_2(t)$) afin d'obtenir le deuxième signal ($b_2(t)$).

6. Procédé selon la revendication 1, comprenant les étapes :

   - de détermination de la qualité d'un premier signal de polarisation ($p_1(t)$) pour le premier signal ($b_1(t)$), et le multiplexage par polarisation du premier signal polarisé ($a_1(t)$) dépendant de la qualité du premier signal de polarisation ($p_1(t)$), et/ou
   - de détermination de la qualité d'un deuxième signal de polarisation ($p_2(t)$) pour le deuxième signal ($b_2(t)$), et le multiplexage par polarisation du deuxième signal polarisé ($a_2(t)$) dépendant de la qualité du deuxième signal de polarisation ($p_2(t)$).

7. Appareil de compensation des distorsions de signal des signaux polarisés les uns par rapport aux autres dans un système de transmission optique par multiplexage par division de longueurs d'ondes, comprenant :

   - un démultiplexeur de polarisation pour le démultiplexage d'un signal reçu fourni par deux signaux ($b_1(t)$, $b_2(t)$),
   - des unités de génération de signal d'erreur $ESU_1$ et $ESU_2$ pour la génération de signaux d'erreurs ($b'_1(t)$, $b'_2(t)$) desdits signaux réalisés par démultiplexage ($b_2(t)$, $b_1(t)$), respectivement,
   - des unités de suppression de diaphonie $XCU_1$, $XCU_2$ pour la soustraction des signaux ($b_1(t)$, $b_2(t)$) des signaux d'erreur ($b'_1(t)$, $b'_2(t)$) et pour la fourniture des signaux de sortie ($c_1(t)$, $c_2(t)$),
   - des moniteurs oculaires $EM_1$, $EM_2$ pour la mesure de la qualité desdits signaux de sortie ($c_1(t)$, $c_2(t)$),
   - une boucle de feedback pour le contrôle du multiplexeur de polarisation et les unités de génération de signal d'erreur $ESU_1$ et $ESU_2$ avec des signaux de feedback ($p_1(t)$, $p_2(t)$), $f_1(t)$, $f_2(t)$).

8. Appareil selon la revendication 7, dans lequel :

   - la première unité de génération de signal d'erreur ($ESU_1$) est adaptée à la détermination d'une première atténuation et/ou d'un premier délai dépendant de la qualité du premier signal et à l'application de la première atténuation et/ou du premier délai au premier signal pour obtenir le premier signal d'erreur, et/ou
   - la deuxième unité de génération de signal d'erreur ($ESU_2$) est adaptée à la détermination d'une deuxième atténuation et/ou d'un deuxième délai dépendant de la qualité du deuxième signal et à l'application de la deuxième atténuation et/ou du deuxième délai au deuxième signal pour obtenir le deuxième signal d'erreur.

9. Appareil selon la revendication 7, dans lequel :

   - la première unité de génération de signal d'erreur ($ESU_1$) est adaptée à la détermination d'une première atténuation dépendante de la qualité du premier signal, à la comparaison de la première atténuation avec une première valeur de diaphonie représentant la diaphonie qui perturbe au moins un des premiers et deuxièmes signaux et à la génération du premier signal d'erreur depuis au moins un des premiers et deuxièmes signaux polarisés, si une relation prédéterminée entre la première atténuation et la première valeur de diaphonie est présente, et/ou
   - la deuxième unité de génération de signal d'erreur ($ESU_2$) est adaptée à la détermination d'une deuxième atténuation dépendante de la qualité du deuxième signal, à la comparaison de la deuxième atténuation avec une deuxième valeur de diaphonie représentant la diaphonie qui perturbe au moins un des premiers et deuxièmes signaux et à la génération du deuxième signal d'erreur depuis au moins un des premiers et deuxièmes signaux polarisés, si une relation prédéterminée entre la deuxième atténuation et la deuxième valeur de diaphonie est présente.

10. Appareil selon la revendication 10, dans lequel :

    - la première unité ($EM_1$) pour la détermination de la qualité du premier signal est reliée à l'unité de compensation de distorsion de premier signal ($XCU_1$) pour une détermination de la qualité de premier signal d'un signal issu de l'unité de compensation de distorsion de premier si-

gnal (XCU$_1$), et/ou

- la deuxième unité (EM$_2$) pour la détermination de la qualité du deuxième signal est reliée à l'unité de compensation de distorsion de deuxième signal (XCU$_2$) pour une détermination de la qualité de deuxième signal d'un signal issu de l'unité de compensation de distorsion de deuxième signal (XCU$_2$).

Fig. 1